# EUROPEAN PATENT SPECIFICATION

(11) **EP 1 991 605 B1**
(45) Date of publication and mention of the grant of the patent: **22.12.2010**
(21) Application number: 07712419.6
(22) Date of filing: 02.03.2007
(51) Int. Cl.: C08G 75/14

(54) **PROCESS FOR PREPARING POLYSULFIDES, POLYSULFIDES, AND THEIR USE**
VERFAHREN ZUR HERSTELLUNG VON POLYSULFIDEN, POLYSULFIDE UND IHRE VERWENDUNG
PROCEDE DE PREPARATION DE POLYSULFURES, POLYSULFURES CORRESPONDANTS ET LEUR UTILISATION

(30) Priority: 06.03.2006 EP 06110719; 27.03.2006 US 786016 P
(43) Date of publication of application: 19.11.2008
(73) Proprietor: Akzo Nobel N.V., 6824 BM Arnhem (NL)
(72) Inventor: KANTZER, Eike Nicolas, 07973 Greiz (DE); KLOBES, Olaf, 07973 Greiz (DE); LANGE, Dieter Wolfgang, 07973 Greiz (DE)
(74) Representative: Schalkwijk, Pieter Cornelis
(86) International application number: PCT/EP2007/051978
(87) International publication number: WO 2007/101819

(56) References cited:
- EP-A- 1 044 936
- US-A- 2 676 165
- US-A- 3 386 963
- US-A- 3 647 766

## Description

The invention relates to a process for preparing polysulfides and to polysulfides produced with the process.

Processes for preparing polysulfides are known in the art. US 2,676,165 discloses the reaction of a linear (SH-terminated) polymeric dimercaptan having the formula H(SRS)ₚH with a monomeric polysulfide having the formula R'-SS-R', wherein R and R' are organic radicals. The product will have the general formula R'S(SRS)ₙSR'.

US 4,124,645 discloses a process for producing high molecular weight polysulfide polymers. The process first produces a low molecular weight hatogen-terminated polymer of polythiodiglycol, e.g. dithiodiglycol (i.e. HOCH₂CH₂SSCH₂CH₂OH). In a second step the halogen-terminated polymer is reacted with alkaline or alkaline earth polysulfide to form a latex dispersion with very high molecular weight. The latex is subsequently converted to SH-terminated polymers.

JP 46-28422 discloses methods for preparing polythiophosphoric acid polysulfide compiling the step of letting a mono- or polysulfide compound having two or more hydroxyl groups in the molecule or a mixture consisting of the sulfide compound and a polyhydric alcohol react with phosphorous sulfide. This reference examplifies the reaction of diphosphorous pentasulfide with HOC₂H₄SSC₂H₄OCH₂OC₂H₄SSC₂H₄OH. With the process described in this reference a high molecular weight hydroxyl-terminated polysulfide cannot be obtained.

It is an object of the present invention to provide a process for preparing novel polysulfides. It is a further object to provide novel polysulfides. Subject-matter of the present invention are processes according to claims 1-6; polysulfides according to claims 7-8; and uses according to claim 9.

This object is achieved with a process for prepaying a polysulfide comprising the step of reacting a first hydroxyl-terminated polysulfide of formula: 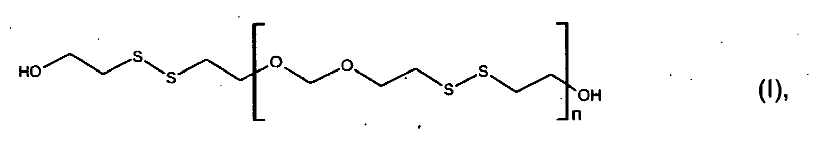 wherein n is 2 to 40, preferably n is 5 to 35, with at least one compound selected from the group consisting of a second hydroxyl-terminated polysulfide which is in accordance with formula (I), a hydroxyl- and/or thiol-containing molecule, and a phosphorous sulfide to obtain a third hydroxyl-terminated polysulfide, wherein the reaction is carried out in the presence of an acid catalyst if the compound is the second hydroxyl-terminated polysulfide or the hydroxyl- and/or thiol-containing molecule, and if the compound is the phosphorous sulfide, the reaction is optionally carried out in the presence of an acid catalyst.

The first hydroxyl-terminated polysulfide (HTPS) used in the process of the invention is in accordance with formula (I) and has the advantage that the reaction according to the invention is selective, whereas the use of, for example, diformal to produce HTPS generally causes by-product formation. The process of the invention enables the production of hydroxyl-terminated polysulfide with a high number average molecular weight of above 15,000 or even above 100,000. A further advantage of the produced third hydroxyl-terminated polysulfide is the lower amount of terminal hydroxyl groups compared to conventional hydroxyl-terminated polysulfide. In a subsequent reduction of the third hydroxyl-terminated polysulfide to form a liquid sulfur-terminated polysulfide fewer by-products are formed. Moreover, using the present process the amount of salt produced is substantially reduced compared to the conventional process; more in particular, no salt will be formed in the production of the hydroxyl-terminated polysulfide and the high molecular lattices.

The acid catalyst used in the process of the invention includes Brønsted acids such as Amberlyst 15, 31, 35, 36, 39, 119, and 131 (cation exchange resins ex Rohm & Haas), Lewatite K1131, K1461, K2431, and K2621 (ex Bayer), Nafion SAC-13 (ex DuPont), and various zeolites such as H-Y, H-Beta, H-MCM.

The acid catalyst is generally used in an amount of at least 0.5 wt%, preferably at least 1 wt%, and most preferably at least 1.5 wt%, based on the total weight of the first HTPS, and generally is at most 25 wt%, preferably at most 20 wt%, and most preferably at most 15 wt%, based on the total weight of the first HTPS.

In one embodiment of the invention the first hydroxyl-terminated polysulfide (HTPS) is reacted with the second HTPS in the presence of an acid catalyst. The second HTPS can be the same as or different from the first HTPS. The third HTPS formed according to this embodiment is an HTPS with a higher number average molecular weight than the first or second HTPS. The product obtained generally has the following structure: 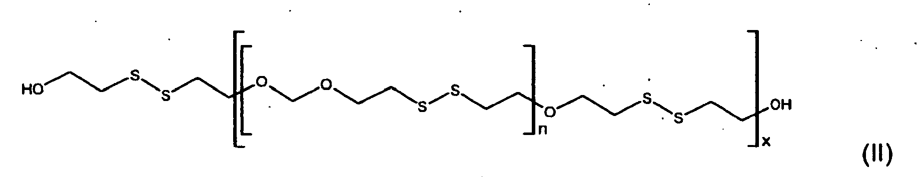 wherein n is 2 to 40 and x is 100 to 2,000.

The number average molecular weight, Mₙ, of the third HTPS according to formula (II) generally is at least 15,000, preferably at least 100,000, and most preferably at least 200,000, and generally the Mₙ is at most 2,000,000, preferably at most 1,500,000, and most preferably at most 1,000,000.

If the first and the second HTPS are different, the molar ratio of the second HTPS to the first HTPS generally is from 10:1 to 1:10, preferably from 5:1 to 1:5, and most preferably from 2:1 to 1:2.

In another embodiment the first HTPS is reacted with a hydroxyl- and/or thiol-containing molecule in the presence of an acid catalyst. The term "hydroxyl-and/or thiol-containing molecule" is to be understood to represent a hydroxyl-and/or thiol-containing monomer. From the molecule or monomer a polymer can be made through poymerization; the molecule or monomer is not a polymer itself. The hydroxyl- and/or thiol-containing molecule can be defined by the formula:

A-R-B,

wherein A and B are independently selected from hydroxyl, thiol, and chloride, and R is a hydrocarbon comprising from 2 to 10 carbon atoms, and optionally comprising at least one other substituent. The substituent may include hydroxyl, thiol, and carboxyl. Suitable examples of such compounds are 1,2-ethanedithiol, β-mercapto ethanol, glycol dimercapto acetate, and bifunctional organic acids such as oxalic acid, and acid halides, such as oxalic dichloride, polyhydric alcohols having from 2 to 20 carbon atoms such as ethylene glycol, propylene glycol, butanediol, pentanediol, hexanediol, glycerol, butanetriol, pentanetriol, trimethylol propane, hexanetriol, polyethylene glycol, and pentaerythrol. Preferred hydroxyl- and/or thiol-containing compounds are 1,2-ethanedithiol, β-mercapto ethanol, acid halides, trimethylol propane, and pentaerythrol. Trimethylol propane and pentaerythrol may introduce branching in the third HTPS, which may alter the chemical and physical properties of the third HTPS.

The produced third HTPS generally has the following structure: 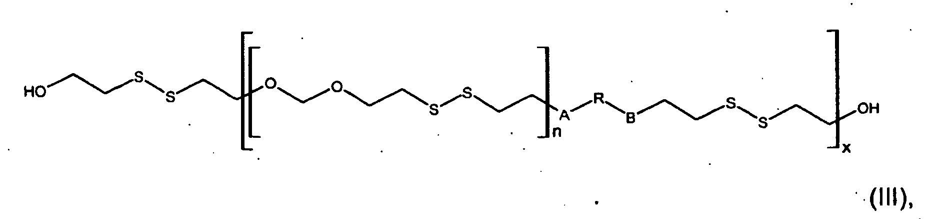 wherein n is 2 to 40 and x is 100 to 2,000, and A-R-B are as defined above.

The hydroxyl- and/or thiol-containing compound introduces an ether function and/or a monosulfide in the third HTPS. Subsequent reduction of this third HTPS leads to a novel liquid thiol-terminated polysulfide which, particularly if the third HTPS comprises monosulfide entities, generally has a lower density than the conventional thiol-terminated polysulfides. Upon curing of this liquid polysulfide the cured product is more elastic than conventional products.

The number average molecular weight of the third HTPS according to formula (III) generally is at least 15,000, preferably at least 100,000, and most preferably at least 200,000, and generally the Mₙ is at most 2,000,000, preferably at most 1,500,000, and most preferably at most 1,000,000.

The molar ratio of the hydroxyl- and/or thiol containing compound to the first HTPS generally is from 10:1 to 1:10, preferably from 5:1 to 1:5, and most preferably from 2:1 to 1:2.

In a third embodiment of the invention the first HTPS is reacted with a phosphorous sulfide. Examples of such phosphorous sulfides include diphosphorous pentasulfide, P₂S₅ or P₄S₁₀, tetraphosphorous trisulfide, tetraphosphorous pentasulfide, tetraphosphorous heptasulfide, and non-stoichiometric PₓS_{y}. It is contemplated to use a plurality of the above-mentioned phosphorous sulfides. The preferred phosphorous sulfide is diphosphorous pentasulfide.

The produced third HTPS has the following structure: 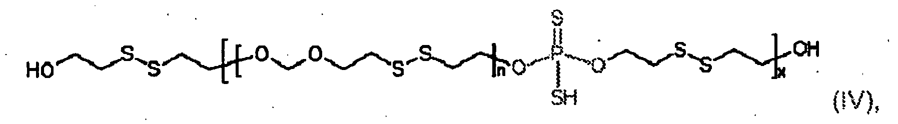 wherein n is 2 to 40 and x is 2 to 2,000.

The number average molecular weight, Mₙ, of the third HTPS according to formula (IV) generally is at least 15,000, preferably at least 100,000, and most preferably at least 200,000, and generally the Mₙ is at most 2,000,000, preferably at most 1,500,000, and most preferably at most 1,000,000.

The molar ratio of the diphosphorous pentasulfide to the first HTPS generally is from 10:1 to 1:10, preferably from 5:1 to 1:5, and most preferably from 2:1 to 1:2.

The phosphorous sulfide enables the reaction to proceed fast and at a high yield and selectivity, which causes this process to be simple and more attractive economically. The reaction thus can easily be performed without the presence of an acid catalyst and hence does not require the acid catalyst to be removed. It is also envisaged to use an acid catalyst.

It is contemplated that the process of the invention can be conducted by reacting the first HTPS with two or more of the compounds mentioned above, such as the second HTPS and the hydroxyl- and/or thiol-containing molecule, the second HTPS and the phosphorous sulfide, the hydroxyl- and/or thiol-containing molecule and the phosphorous sulfide, and a mixture of all three compounds. These compounds may be added to the first HTPS as a mixture, or one after the other.

The above processes are generally carried out in the presence of an organic solvent. This solvent, is preferably free of water. Examples of suitable solvents are aromatic compounds such as toluene, benzene, and xylene, or nonaromatic compounds such as pentane, hexane, and tetrahydrofuran.

The temperature at which each one of the above processes is conducted generally is between 40°C and the boiling temperature of the reaction mixture. In one embodiment of the invention the reaction mixture is refluxed at its boiling temperature.

The invention further pertains to a process as described above wherein the third hydroxyl-terminated polysulfide is reacted with at least one reducing agent to form a thiol-terminated polysulfide.

The thiol-terminated polysulfide has a lower Mₙ than the third HTPS. Generally, the number average molecular weight of the thiol-terminated polysulfide is at least 500, preferably at least 750, and most preferably at least 1,000, and generally the Mₙ is at most 10,000, preferably at most 7,000, and most preferably at most 5,000.

The reducing agent suitable for use in the process of the invention is commonly known in the art. Examples of such reducing agents are hydrogen sulfide, hydrogen sulfite, sodium sulfite, potassium sulfite, dithionite, and combinations thereof including combinations of dithionite, hydrogen sulfite, and a basic salt such as sodium hydroxide, and triethyl amine and hydrogen sulfide, and triethyl amine and sodium sulfite.

The reducing agent is generally used in an amount of at least 0.5 wt%, preferably at least 1 wt%, and most preferably at least 1.5 wt%, based on the total weight of the third HTPS, and generally is at most 50 wt%, preferably at most 30 wt%, and most preferably at most 20 wt%, based on the total weight of the third HTPS.

In one embodiment of the invention, the third HTPS, which is in accordance with formula II, reacts with the reducing agent to form a thiol-terminated polysulfide according to formula: 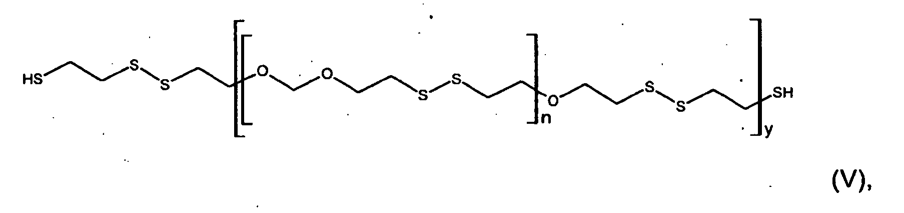 wherein n has a value between 2 and 40 and y has a value between 1 and 40.

The invention further pertains to a novel thiol-terminated polysulfide obtainable by reacting the third HTPS, which is in accordance with formula III, with the reducing agent. The thiol-terminated polysulfide has formula VI: 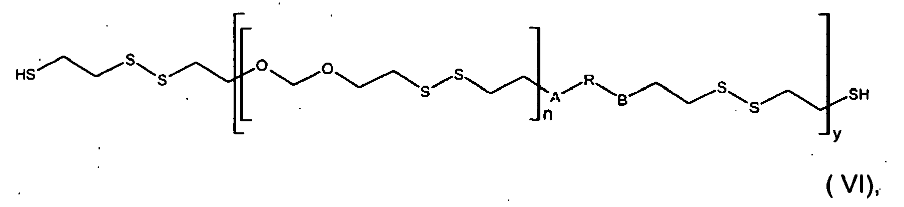 wherein n has a value between 2 and 40 and y has a value between 1 and 40, A-R-B are as defined above.

In a further embodiment of the invention, the third HTPS, which is in accordance with formula IV, reacts with the reducing agent to form a thiol-terminated polysulfide according to formula: 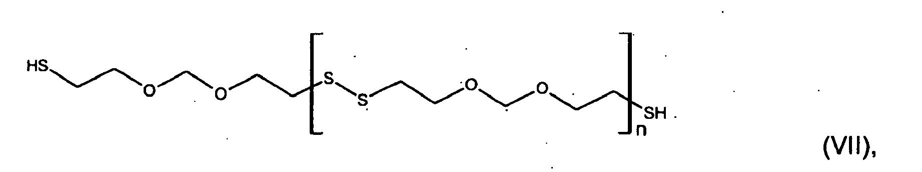 wherein n has a value between 5 and 20.

The thiol-terminated polysulfide according to any one of formulae (V), (VI), and (VII) generally has a viscosity between 1 and 80 Pa.s measured at 25°C, preferably between 2 and 70 Pa.s, and most preferably between 3 and 60 Pa.s. The thiol-terminated polysulfide of the invention generally has an SH content between 0.1 and 10%, preferably between 0.5 and 8%, and most preferably between 1 and 6%.

The invention further pertains to the use of the thiol-terminated polysulfide of the invention in sealants, adhesives, and coating compositions.

As a general remark it is noted that the formulae used in this application serve to represent the products used in and formed by the processes of the invention. A skilled person will understand that products will be produced that differ from the exact formulation of the formulae. It is intended that the formulae also represent such variations.

The present invention is further illustrated in the Examples below.

### EXAMPLES

### Comparative Examples

As comparative examples, Thioplast G10 (Mₙ = 4400-4700, η^{25°C} = 38-50 Pa·s, SH-content = 1.4-1.5 % (m/m)), Thioplast G112 (Mₙ = 3900-4400, η^{25°C} = 38-50 Pa·s, SH-content = 1.5-1.7), Thioplast G1 (Mₙ = 3400-3600, η^{25°C} = 41-52 Pa·s, SH-content = 1.9-2.0 % (m/m)), and Thioplast G21 (Mₙ = 2100-2700, η^{25°C} = 10-20 Pa·s, SH-content = 2.5-3.1 % (m/m)) ex Thioplast Chemicals GmbH & Co. KG were used. NMR-results show that Thioplast samples do not contain trisulfide or monosulfide bonds, or phosphorous. Except for Thioplast G10, all Thioplast samples were cross-linked. The amount of cross-linking agent used varies between 0.5 mol-% Trichloro-propane for Thioplast G112 and 2.0 mol-% for Thioplast G1 and G21.

### Example 1

Auto-oxidation of hydroxyl-terminated polysulfide-polymer (HTPS): To 500 g of HTPS with a viscosity of 18.5 Pa·s and an OH-number of 42 mg KOH·g⁻¹ (corresponds to an average molar mass of 2,500 g mol⁻¹) in 500 g of toluene as solvent are added 50 g of a Brønstedt-acidic Amberlyst 15 cation-exchange resin. The reaction vessel is then equipped with a reflux condenser and the reaction mixture is heated to 112°C for two days under vigorous stirring. The Amberlyst 15 is then filtered off the still hot solution with a G2 glass frit. Finally the solvent is removed with a rotary evaporator and subsequent with a membrane pump. The thus obtained milky gel-like substance has an OH-number of 1.2 mg KOH·g⁻¹ (determined using the method according to DIN 53240) and a viscosity of 774 Pa·s (determined at 25°C). The extrapolated number average molecular weight of the product (viscosity vs. molecular weight calibration) was about 50,000 g mol⁻¹.

### Example 2

Reaction of 1,2-ethanedithiol with the HTPS used in Example 1: 50 g of Amberlyst 15 are suspended in a mixture of 500 g of HTPS (see Example 1) in 500 g of toluene under vigorous stirring. The mixture is then brought to reflux at 112°C. 100 ml (molar excess of 600%) of 1,2-ethanedithiol are added dropwise over a period of 30 minutes. The reaction mixture is kept at reflux for six hours, after which the catalyst is removed with a G2 glass frit and the solvent evaporated. The obtained product is a rubber-like solid. The product was analyzed using ¹H-NMR. The NMR spectrum shows that 1,2-ethanedithiol was incorporated. It further showed a small amount of trisulfide bonds to be present. The splitting was performed with Na₂S₂O₄ in accordance with the procedure described in DD 35849.

The obtained product was analyzed using ¹H-NMR. The NMR-spectra proved that 1,2-ethanedithiol is still present in the final product.

### Example 3

Reaction of 2-mercaptoethanol (Beta-Mercaptoethanol, BME) with HTPS: To 500 g of HTPS (see Example 1) in 500 ml of toluene are added 50 g of Amberlyst 15. The reaction mixture is heated to 112°C and kept at reflux for 24 hours. The Amberlyst 15 is filtered off with a G2 glass frit and the solvent is evaporated. The milky product has a viscosity of 74 Pa·s at 25°C, and an OH-number of 0.7 mg KOH·g⁻¹. The number average molecular weight is 3,100 g.mol⁻¹, and the weight average molecular weight is 10,800 g.mol⁻¹.

### Example 4

Reaction of diphosphorous pentasulfide with HTPS (of Example 1): To a solution of hydroxyl-terminated polysulfide (2,500 g, 0.625 mol) in 1,800 g toluene is added diphosphorous pentasulfide (70 g, 0.178 mol) over a period of once hour at 90°C, followed by stirring for seven hours while refluxing the mixture. The excess of P₄S₁₀ is then filtered off. The solvent is removed under reduced pressure. The corresponding dialkyldithiophosphorous acid ester is obtained in 97% yield. ³¹P NMR reveals the presence of dithiophosphoric ester groups.

The obtained product is suspended in toluene and is then reduced by bubbling H₂S through the reaction mixture at room temperature for up to 30 min. The reduced product has a viscosity at 25°C of 24 Pa·s, and an SH-content of 1.7% (m/m). ¹H- and ¹³C-NMR reveal the presence of trisulfide groups and by using ³¹P NMR traces of phosphorous were found.

## Claims

1. Process for preparing a polysulfide comprising the step of reacting a first hydroxyl-terminated polysulfide of formula: 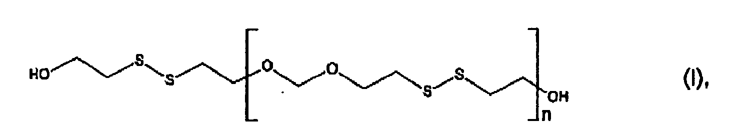 wherein n is 2 to 40, with at least one compound selected from the group consisting of
(a) a second hydroxyl-terminated polysulfide which is in accordance with formula (I), resulting in a third hydroxyl-terminated polysulfide with a higher number average molecular weight than the first or second hydroxyl-terminated polysulfide and having the formula (II) 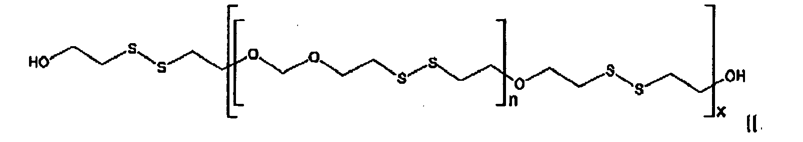 wherein n is 2 to 40 and x is 100 to 2,000,
(b) a hydroxyl- and/or thiol-containing molecule of the formula A-R-B wherein A and B are independently selected from hydroxyl and thiol and R is a hydrocarbon comprising from 2 to 10 carbon atoms and optionally comprising at least one other substituent, resulting in a third hydroxyl-terminated polysulfide having the formula (III) 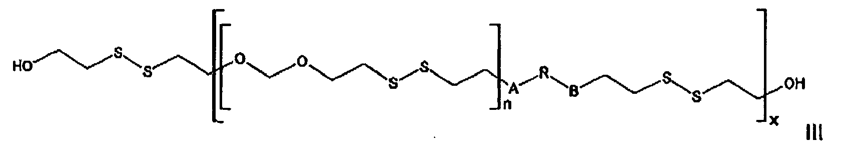 wherein n is 2 to 40 and x is 100 to 2,000, and
(c) a phosphorous sulfide, resulting in a third hydroxyl-terminated polysulfide having the formula (IV): 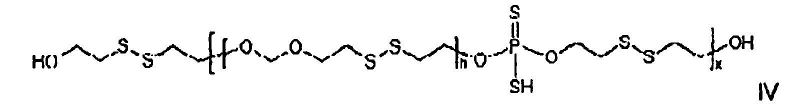 wherein n is 2 to 40 and x is 2 to 2,000.
wherein the reaction is carried out in the presence of an acid catalyst if the compound is the second hydroxyl-terminated polysulfide or the hydroxyl- and/or thiol-containing molecule, and if the compound is the phosphorous sulfide, the reaction is optionally carried out In the presence of an acid catalyst.

2. Process according to claim 1 wherein the compound is the second hydroxyl-terminated polysulfide, and the first and second hydroxyl-terminated polysulfides are the same.

3. Process according to claim 1 wherein the compound is the hydroxyl- and/or thiol-containing molecule, the hydroxyl- and/or thiol-containinq molecule being selected from the group consisting of 1,2-ethanedithiol, β-mercapto ethanol, glycol dimercapto acetate, and bifunctional organic acids.

4. Process according to claim 3 wherein the hydroxyl- and/or thiol-containing molecule are selected from the group consisting of 1,2-ethanedithiol, β-mercapto ethanol, trimethylol propane, and pentaerythrol.

5. Process according to any one of the preceding claims wherein the third hydroxyl-terminated polysulfide is reacted with at least one reducing agent to form a thiol-terminated polysulfide.

6. Process according to claim 6 wherein the reducing agent is selected from the group consisting of hydrogen sulfide, hydrogen sulfite, and dithionite.

7. A hydroxyl-terminated polysulfide of one of the formulae II, III or IV obtainable by the process of any one of claims 1 to 4 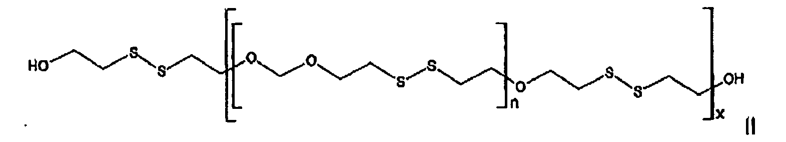 wherein n is 2 to 40 and x is 100 to 2,000, 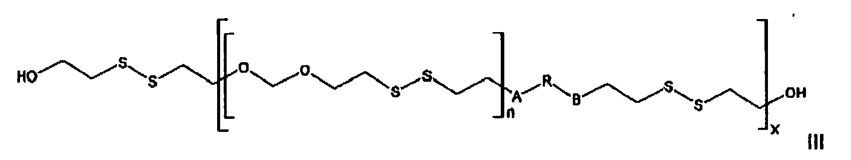 wherein n is 2 to 40 and x is 100 to 2,000, and wherein A and B are independently selected from hydroxyl and thiol, and R is a hydrocarbon comprising from 2 to 10 carbon atoms, and optionally comprising at least one other substituent, 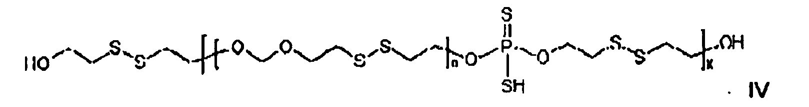 wherein n is 2 to 40 and x is 2 to 2,000,

8. A thiol-terminated polysulfide of one of the formulae V, VI or VII obtainable by the process of claim 5 or 6 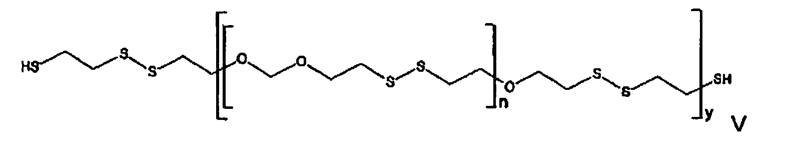 wherein n has a value between 2 and 40 and y has a value between 1 and 40, 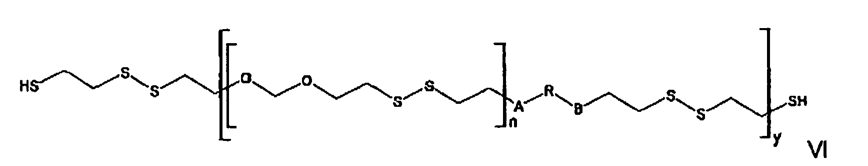 wherein n has a value between 2 and 40 and y has a value between 1 and 40, and wherein A and B are independently selected from hydroxyl and thiol, and R is a hydrocarbon comprising from 2 to 10 carbon atoms, and optionally comprising at least one other substituent, 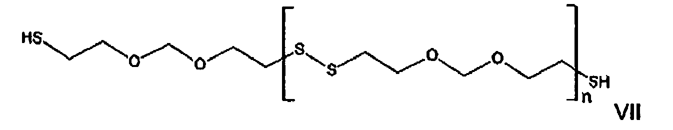 wherein n has a value between 5 and 20.

9. Use of the thiol-terminated polysulfide of claim 8 in sealants.

## Patentansprüche

1. Verfahren zur Herstellung eines Polysulfids, umfassend den Schritt des Umsetzens eines ersten Polysulfids mit Hydroxyl-Endgruppe der Formel: 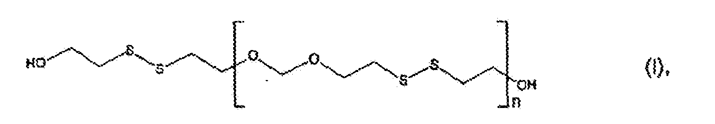 wobei n 2 bis 40 ist, mit mindestens einer Verbindung, ausgewählt aus der Gruppe bestehend aus
(a) einem zweiten Polysulfid mit Hydroxyl-Endgruppe, welches der Formel (I) entspricht, woraus sich ein drittes Polysulfid mit Hydroxyl-Endgruppe mit einem höheren Zahlenmittel des Molekulargewichts als das erste oder zweite Polysulfid mit Hydroxyl-Endgruppe ergibt und welches die Formel (II) aufweist: 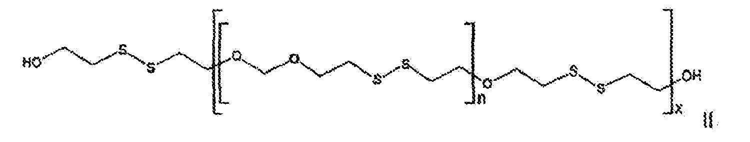 wobei n 2 bis 40 ist und x 100 bis 2000 ist,
(b) einem Hydroxyl und/oder Thiol enthaltenden Molekül der Formel A-R-B, wobei A und B unabhängig voneinander aus Hydroxyl und Thiol ausgewählt sind und R ein Kohlenwasserstoff ist, der 2 bis 10 Kohlenstoffatome umfasst und gegebenenfalls mindestens einen anderen Substituenten umfasst, woraus sich ein drittes Polysulfid mit Hydroxyl-Endgruppe ergibt, welches die Formel (III) aufweist: 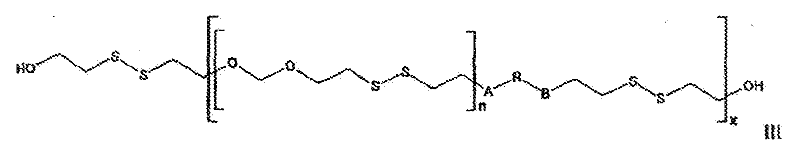 wobei n 2 bis 40 ist und x 100 bis 2000 ist; und
(c) einem Phosphorsulfid, woraus sich ein drittes Polysulfid mit Hydroxyl-Endgruppe ergibt, welches die Formel (IV) aufweist: 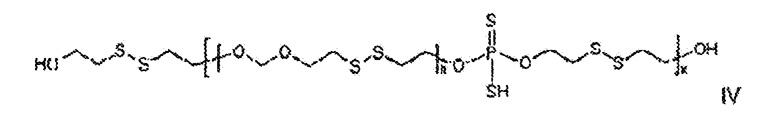
wobei n 2 bis 40 ist und x 2 bis 2000 ist,
wobei die Umsetzung in Gegenwart eines Säurekatalysators durchgeführt wird, wenn die Verbindung das zweite Polysulfid mit Hydroxyl-Endgruppe oder das Hydroxyl und/oder Thiol enthaltende Molekül ist, und wenn die Verbindung das Phosphorsulfid ist, die Umsetzung gegebenenfalls in Gegenwart eines Säurekatalysators durchgeführt wird.

2. Verfahren nach Anspruch 1, wobei die Verbindung das zweite Polysulfid mit Hydroxyl-Endgruppe ist und das erste und das zweite Polysulfid mit Hydroxyl-Endgruppe gleich sind.

3. Verfahren nach Anspruch 1, wobei die Verbindung das Hydroxyl und/oder Thiol enthaltende Molekül ist, wobei das Hydroxyl und/oder Thiol enthaltende Molekül ausgewählt ist aus der Gruppe bestehend aus 1,2-Ethandithiol, β-Mercaptoethanol, Glykoldimercaptoacetat und bifunktionellen organischen Säuren.

4. Verfahren nach Anspruch 3, wobei das Hydroxyl und/oder Thiol enthaltende Molekül ausgewählt ist aus der Gruppe bestehend aus 1,2-Ethandithiol, β-Mercaptoethanol, Trimethylolpropan und Pentaerythrit.

5. Verfahren nach einem der vorhergehenden Ansprüche, wobei das dritte Polysulfid mit Hydroxyl-Endgruppe mit mindestens einem Reduktionsmittel umgesetzt wird, um ein Polysulfid mit Thiol-Endgruppe zu bilden.

6. Verfahren nach Anspruch 5, wobei das Reduktionsmittel ausgewählt ist aus der Gruppe bestehend aus Wasserstoffsulfid, Wasserstoffsulfit und Dithionit.

7. Ein Polysulfid mit Hydroxyl-Endgruppe nach einer der Formeln II, III oder IV, erhältlich durch das Verfahren nach einem der Ansprüche 1 bis 4, 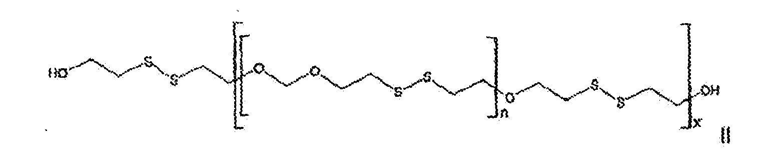 wobei n 2 bis 40 ist und x 100 bis 2000 ist, 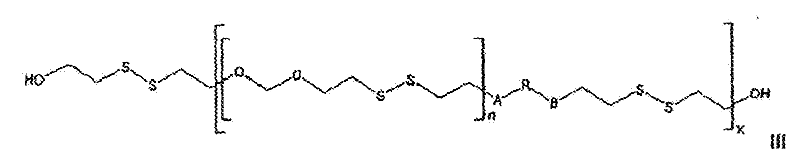 wobei n 2 bis 40 ist und x 100 bis 2000 ist, und wobei A und B unabhängig voneinander ausgewählt sind aus Hydroxyl und Thiol und R ein Kohlenwasserstoff ist, der 2 bis 10 Kohlenstoffatome umfasst und gegebenenfalls mindestens einen weiteren Substituenten umfasst, 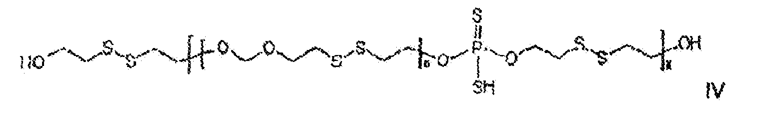 wobei n 2 bis 40 ist und x 2 bis 2000 ist.

8. Ein Polysulfid mit Thiol-Endgruppe nach einer der Formeln V, VI oder VII, erhältlich durch das Verfahren nach Anspruch 5 oder 6 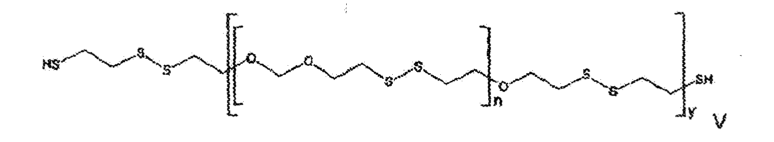 wobei n einen Wert zwischen 2 und 40 hat und y einen Wert zwischen 1 und 40 hat, 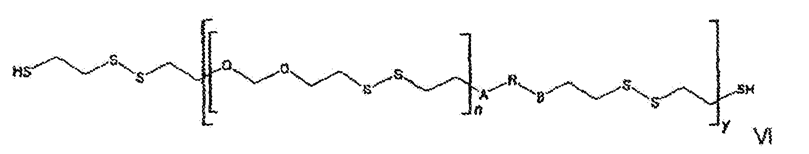 wobei n einen Wert zwischen 2 und 40 hat und y einen Wert zwischen 1 und 40 hat und wobei A und B unabhängig voneinander aus Hydroxyl und Thiol ausgewählt sind und R ein Kohlenwasserstoff ist, der 2 bis 10 Kohlenstoffatome umfasst und gegebenenfalls mindestens einen anderen Substituenten umfasst, 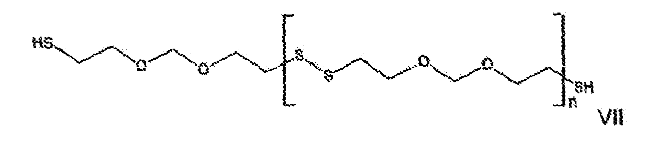 wobei n einen Wert zwischen 5 und 20 hat.

9. Verwendung des Polysulfids mit Thiol-Endgruppe nach Anspruch 8 in Abdichtmitteln.

## Revendications

1. Procédé de préparation d'un polysulfure, comprenant l'étape consistant à faire réagir un premier polysulfure à terminaison hydroxyle de formule : 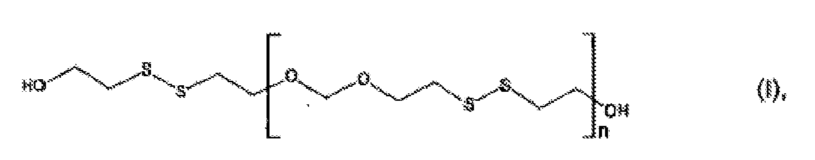 dans laquelle n est 2 à 40, avec au moins un composé choisi dans le groupe constitué par :
(a) un second polysulfure à terminaison hydroxyle qui correspondest de à formule (I), pour donner un troisième polysulfure à terminaison hydroxyle possédant un poids moléculaire moyen en nombre plus élevé que le premier ou second polysulfure à terminaison hydroxyle et ayant la formule (II) : 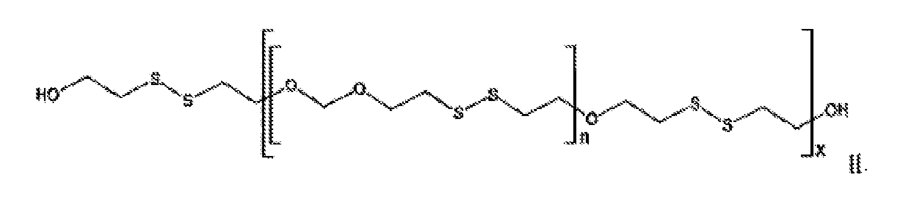 dans laquelle n est 2 à 40 et x est 100 à 2 000,
(b) une molécule contenant un hydroxyle et/ou un thiol de formule A-R-B, dans laquelle A et B sont choisis indépendamment parmi un hydroxyle et un thiol et R est un hydrocarbure contenant 2 à 10 atomes de carbone et comprenant facultativement au moins un autre substituant, pour donner un troisième polysulfure à terminaison hydroxyle de formule (III) : 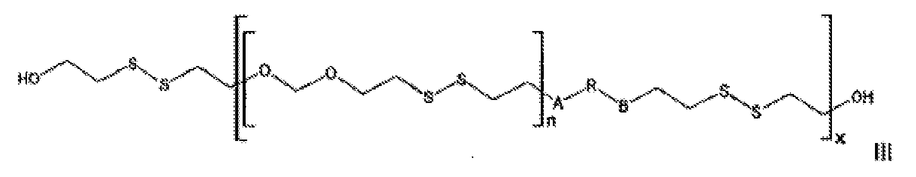 dans laquelle n est 2 à 40 et x est 100 à 2 000, et
(c) un sulfure phosphoreux, pour donner un troisième polysulfure à terminaison hydroxyle de formule (IV) : 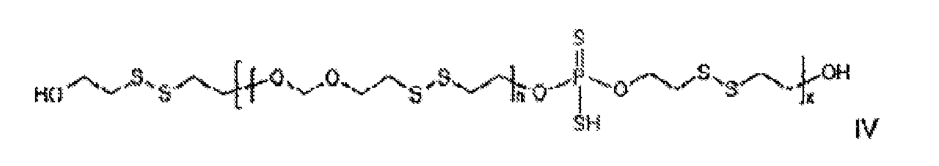 dans laquelle n est 2 à 40 et x est 2 à 2 000,
dans lequel la réaction est menée en présence d'un catalyseur acide si le composé est le second polysulfure à terminaison hydroxyle ou la molécule contenant un hydroxyle et/ou un thiol, et si le composé est le sulfure phosphoreux, la réaction est menée facultativement en présence d'un catalyseur acide.

2. Procédé selon la revendication 1, dans lequel le composé est le second polysulfure à terminaison hydroxyle, et les premier et second polysulfures à terminaison hydroxyle sont identiques.

3. Procédé selon la revendication 1, dans lequel le composé est la molécule contenant un hydroxyle et/ou un thiol, la molécule contenant un hydroxyle et/ou un thiol étant choisie dans le groupe constitué par le 1,2-éthanedithiol, le β-mercaptoéthanol, le dimercapto acétate de glycol et les acides organiques bifonctionnels.

4. Procédé selon la revendication 3, dans lequel la molécule contenant un hydroxyle et/ou un thiol est choisie dans le groupe constitué par le 1,2-éthanedithiol, le β-mercaptoéthanol, le triméthylol propane et le pentaérythrol.

5. Procédé selon l'une quelconque des revendications précédentes, dans lequel le troisième polysulfure à terminaison hydroxyle est mis à réagir avec au moins un agent réducteur pour former un polysulfure à terminaison thiol.

6. Procédé selon la revendication 5, dans lequel l'agent réducteur est choisi dans le groupe constitué par le sulfure d'hydrogène, le sulfite d'hydrogène et le dithionite.

7. Polysulfure à terminaison hydroxyle de formule II, III ou IV, pouvant être obtenu par le procédé selon l'une quelconque des revendications 1 à 4 : 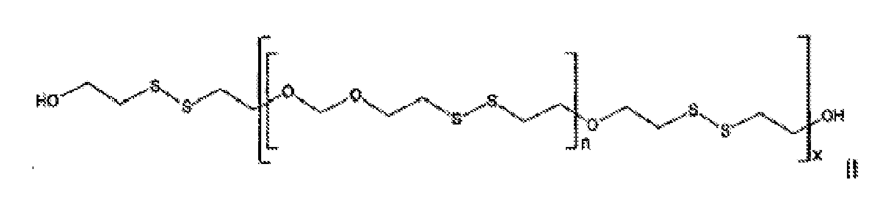 dans laquelle n est 2 à 40 et x est 100 à 2 000, 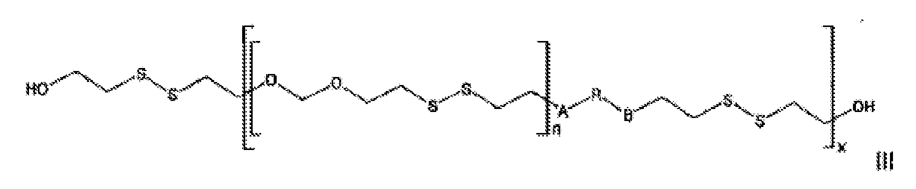 dans laquelle n est 2 à 40 et x est 100 à 2 000, et dans laquelle A et B sont choisis indépendamment parmi un hydroxyle et un thiol et R est un hydrocarbure contenant 2 à 10 atomes de carbone, et comprenant facultativement au moins un autre substituant, 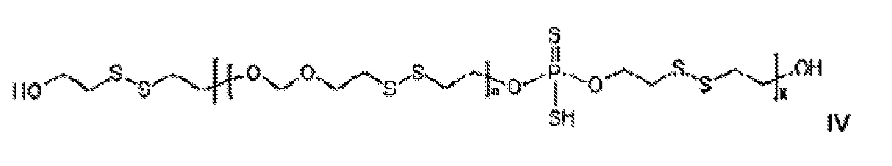 dans laquelle n est 2 à 40 et x est 2 à 2 000.

8. Polysulfure à terminaison thiol de formule V, VI ou VII, pouvant être obtenu par le procédé de la revendication 5 à 6 : 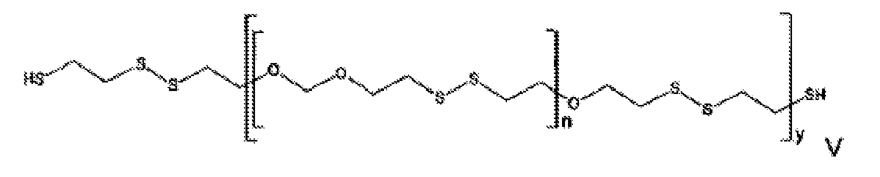 dans laquelle la valeur de n est située entre 2 et 40 et la valeur de y est située entre 1 et 40, 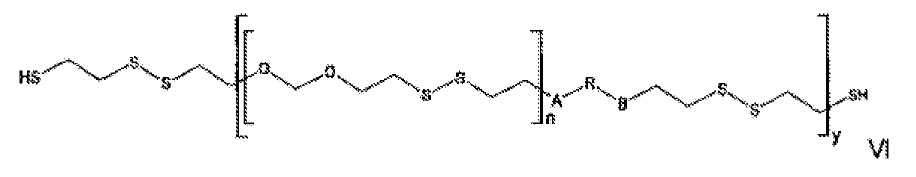 dans laquelle la valeur de n est située entre 2 et 40 et la valeur de y est située entre 1 et 40, et dans laquelle A et B sont choisis indépendamment parmi un hydroxyle et un thiol et R est un hydrocarbure contenant 2 à 10 atomes de carbone et comprenant facultativement au moins un autre substituant, 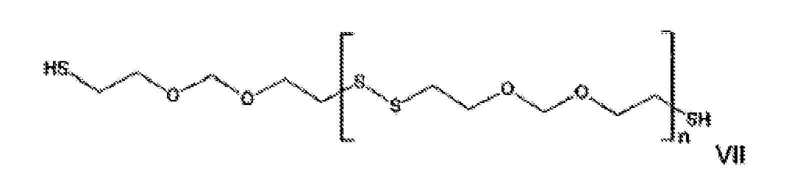 dans laquelle la valeur de n est située entre 5 et 20.

9. Utilisation du polysulfure à terminaison thiol selon la revendication 8 dans des produits d'étanchéité.
